# EUROPÄISCHE PATENTSCHRIFT

(11) **EP 2 794 718 B1**
(45) Veröffentlichungstag und Bekanntmachung des Hinweises auf die Patenterteilung: **05.07.2023**
(21) Anmeldenummer: 12798730.3
(22) Anmeldetag: 10.12.2012
(51) Int. Cl.: C08G 63/78

(54) **VERFAHREN ZUR HERSTELLUNG VON POLYESTERN**
PROCESS FOR PRODUCING POLYESTERS
PROCÉDÉ POUR LA PRÉPARATION D'UN POLYESTER

(30) Priorität: 19.12.2011 DE 102011089056
(43) Veröffentlichungstag der Anmeldung: 29.10.2014
(73) Patentinhaber: Evonik Operations GmbH, 45128 Essen (DE)
(72) Erfinder: HENNIG, André, 55218 Ingelheim (DE); SCHMIED, Thomas, 64750 Lützelbach (DE); LUH, Jürgen, 63683 Ortenberg (DE); BRAND, Thorsten, 45772 Marl (DE); SCHMITT, Günter, 64291 Darmstadt (DE); KORELL, Michael, 44805 Bochum (DE)
(74) Vertreter: Evonik Patent Association
(86) Internationale Anmeldenummer: PCT/EP2012/074930
(87) Internationale Veröffentlichungsnummer: WO 2013/092273

(56) Entgegenhaltungen:
- EP-A1- 0 320 586
- EP-A1- 0 711 597
- EP-A1- 1 491 569
- WO-A1-2010/035931
- WO-A1-2011/062600
- DE-C1- 19 505 680
- GB-A- 1 233 411
- JP-A- 7 196 782
- DATABASE WPI Week 199930 Thomson Scientific, London, GB; AN 1999-352907 XP002691941, -& JP 11 130855 A (DAINIPPON INK & CHEM INC) 18. Mai 1999 (1999-05-18)

## Beschreibung

Die vorliegende Erfindung betrifft ein Verfahren zur Herstellung von hochmolekularen Co-Polyestern unter Einsatz eines Kneters.

Co-Polyester, hier vereinfacht auch Polyester genannt, werden in einer Vielzahl von Endanwendungen eingesetzt. Beispielsweise finden Sie Anwendung als Bestandteil in Klebstoffen, als Bindemittel für Metallbeschichtungen, beispielsweise Innenbeschichtungen von Konservendosen, als Bindemittel zur Folienbeschichtung oder aber auch als Bestandteil in der Folienherstellung.

Technisch werden Polyester in der Regel durch Polykondensationsreaktionen entsprechender Di- oder Polycarbonsäuren mit Diolen oder Polyolen hergestellt, das heißt durch Reaktion von Molekülen mit mindestens zwei reaktiven Endgruppen, wobei ein kleines Molekül, beispielsweise Wasser oder niedere Alkohole, während der Synthese eliminiert wird. Die genannten Polykondensationsreaktionen erfolgen in der Regel batchweise, das heißt die entsprechenden Edukte werden in einer geeigneten Apparatur, beispielsweise einem Kessel oder einer Kesselkaskade, miteinander unter Bildung der Polyester umgesetzt. Die Polykondensationsreaktion erfolgt üblicherweise bei Temperaturen von 150 - 280 °C innerhalb von 3 bis 30 Stunden, wobei nach Abspaltung des Großteils der theoretisch entstehenden Wassermenge mit Vakuum gearbeitet werden kann. Wahlweise kann auch unter Zusatz von Katalysatoren zur Beschleunigung der Kondensationsreaktionen und/oder Schleppmittels zur Abtrennung des Reaktionswassers gearbeitet werden. Die genannten Verfahren haben den Nachteil, dass diese nur batchweise erfolgen können und dass nicht alle gewünschten Eigenschaften des Polyesters durch die Wahl der Reaktionsbedingungen eingestellt werden können. Dies gilt insbesondere für Polyester mit höherer Schmelzviskosität, die auf die genannte Art und Weise nicht wirtschaftlich sinnvoll und mit gleichbleibenden Produkteigenschaften hergestellt werden können.

WO 2011/ 062600 beschreibt ein Verfahren zur Herstellung von typischerweise kristallinen Polyestern mit höherer Schmelzviskosität, bei dem zunächst in einem zweistufigen Prozess Polyester auf herkömmliche Art und Weis im Batchverfahren hergestellt werden und anschließend mittels einer Nachkondensation in einem Kneter zu Polyestern mit höherer Schmelzviskosität umgesetzt werden. Das genannte Verfahren ist einerseits durch das mehrstufige Vorgehen sehr aufwendig und bildet die gewünschten Polyester erst durch erneutes Aufschmelzen der Polyester in einer entsprechenden Nachreaktion bei 260 °C, andererseits ist die Viskosität des Startmaterials der Nachkondensation bereits so hoch, dass eine aufwendige Schmelzehandhabung erforderlich ist. Weiterhin kann die in der Nachkondensation verwendete hohe Verarbeitungstemperatur zu Zersetzungsreaktionen der Polyester und damit zum Abbruch des Molekulargewichtsaufbaus oder erhöhten Säurezahlen im Endprodukt oder zu erhöhten Farbwerten führen.

WO2010/035931 A1 beschreibt ein Verfahren zur Herstellung Poly(trimethylen)terephthalat bei dem ein oder zwei Reaktoren eingesetzt werden können, bei denen es sich um Extruder vom Kneter-Typ handeln kann, wobei 1,3-Propandiol und Terephthalsäure oder Dimethylterephthalat in den Reaktor gegeben werden, um ein niedrig-molekulares Poly(trimethylen)terephthalat durch Direktveresterung oder Transveresterung zu erhalten und Zugabe eines Polymerisationskatalysators sowie von Additiv unter Anwendung eines Vakuums im hinteren Teil des Reaktors um ein höher-molekulares Poly(trimethylen)terephthalat durch Polykondensation zu erhalten.

Aufgabe der vorliegenden Erfindung ist die Bereitstellung eines vereinfachten und effizienten Verfahrens zur Herstellung von insbesondere hochmolekularen Co-Polyestern, mit dem die gewünschten Eigenschaften der Co-Polyester, wie u. A. niedrige Säurezahlen, auf einfache Weise eingestellt werden können. Gleichzeitig soll das Herstellungsverfahren möglichst hohe Umsatzraten ermöglichen um die Effizienz der Synthese von Co-Polyestern erhöhen zu können und diese auch in ausreichender Menge zur Verfügung stellen zu können.

Die vorliegende Aufgabe wird durch Verfahren gemäß der vorliegenden Erfindung gelöst.

So betrifft die vorliegende Erfindung ein Verfahren zur Herstellung von amorphen Polyestern, wobei in einem ersten Schritt in einem Kessel Di- und/oder Polycarbonsäuren mit ein- oder mehrfach funktionellen Alkoholen umgesetzt werden und/oder Lactone umgesetzt werden und in einem zweiten Schritt eine Polykondensation durchgeführt wird, wobei der zweite Schritt in einem Kneter erfolgt, dadurch gekennzeichnet dass die Di- und/oder Polycarbonsäuren ausgewählt sind aus Adipinsäure, Adipinsäuredimethylester, Sebacinsäure, Dimethylsebacat, Phthalsäure, Isophthalsäure, Terephthalsäure, 2,6-Naphthalindicarbonsäure, Trimellitsäure, deren Ester-Derivate oder deren Anhydride, und die ein- oder mehrfach funktionellen Alkohole ausgewählt sind aus Ethylenglykol, Propandiol-1,2, Propandiol-1,3, Butandiol-1,4, Pentandiol-1,5, Hexandiol-1,6, Neopentylglykol, Butylethylpropandiol-1,3, Methylpropandiol-1,3, Methylpentandiole, Cyclohexandimethanole, Tricylclo-[2.2.1]-decandimethanol, Isomeren des Limonendimethanols, Trimethylolpropan und Mischungen daraus, die Polyester ein zahlenmittleres Molgewicht (M_{N}) im Bereich von 9.000 - 35.000 g/mol, bestimmt mittels Gelpermeationschromatographie (GPC) und ein massenmittleres Molgewicht (Mw) im Bereich von 30.000 - 100.000 g/mol, bestimmt mittels Gelpermeationschromatographie (GPC), aufweisen, wobei als Kneter ein- oder zweiwellige Kneter, Ringscheibenreaktoren oder ein- oder zweiwellige Extruder eingesetzt werden und wobei im zweiten Schritt die Temperaturen der Polymerschmelze 220 °C - 245 °C betragen.

Es hat sich überraschend gezeigt, dass Polyester mit den gewünschten Eigenschaften erhalten werden, wenn die eigentliche Polykondensation nicht wie üblich in einem Rührkessel-Reaktor, sondern in einem Kneter erfolgt. Die erfindungsgemäße Vorgehensweise hat den Vorteil, dass die erfindungsgemäßen Co-Polyester mit den gewünschten Eigenschaften schnell und energieeffizient hergestellt werden können. Dies gelingt überraschend auch mit niedrig viskosen Vorprodukten, welche dem Kneter zugeführt werden. Weiterhin gelingt die Herstellung der Co-Polyester sowohl in batch- als auch in kontinuierlicher Betriebsweise und erlaubt eine den wirtschaftlichen Erfordernissen angepasste Betriebsweise. Weiterhin erlaubt die erfindungsgemäße Vorgehensweise die Herstellung von Co-Polyestern mit niedriger Säurezahl, die nach herkömmlichen Verfahren nach dem Stand der Technik nur schwer zu erhalten sind. Diese niedrige Säurezahl erlaubt die Anwendung der Polyester in den oben benannten Verwendungsbereichen, besonders in der Metallbeschichtung. Darüber hinaus hat sich überraschenderweise gezeigt, dass nach dem erfindungsgemäßen Verfahren Co-Polyester mit verminderter Verfärbung erhalten werden. Diese geringere Verfärbung erlaubt die Anwendung der erfindungsgemäß hergestellten Co-Polyester auch in Anwendungen mit hohen optischen Anforderungen. Weiterhin ließ sich überraschend zeigen, dass das Verfahren hinsichtlich der Monomerzusammensetzung der Co-Polyester breit einsetzbar ist.

Unter amorphen Polyestern werden im Rahmen der vorliegenden Erfindung solche Polyester verstanden, die nur einen Phasenübergang 2. Ordnung bei einer Glasübergangstemperatur, Tg, gemessen mit der Differential Scanning Calorimetry (DSC), aufweisen, ohne gleichzeitig ein kristallines oder semikristallines Verhalten zu zeigen, also keine weiteren Schmelzpunkte im DSC erkennen lassen. Insbesondere zeichnen sich amorphe Polyester dadurch aus, dass die Schmelzviskosität oberhalb der Glasübergangstemperatur nur langsam mit steigender Temperatur sinkt. Bei steigendem Molekulargewicht steigt dagegen die Schmelzviskosität stark an, so dass üblicherweise hohe Prozesstemperaturen, um die 260 °C oder höher, notwendig sind, um die Produkte herzustellen.

Ein Beispiel für ein geeignetes Lacton ist insbesondere ε-Caprolacton.

Weiterhin eignen sich für die Herstellung der Polyester auch monofunktionelle Carbonsäuren, die zur Regelung des Molekulargewichtes eingesetzt werden können. Hierzu geeignet sind beispielsweise gesättigte und ungesättigte Fettsäuren oder Benzoesäure. Beispiele für gesättigte und ungesättigte Fettsäuren sind Stearinsäure, Palmitinsäure, Kokosfettsäure, Myristinsäure, Laurinsäure, Perlagonsäure, Myristoleinsäure, Palmitoleinsäure, Icosensäure, Ölsäure, Linolsäure oder Linolensäure oder Mischungen aus diesen.

Die nach der erfindungsgemäßen Vorgehensweise hergestellten, vorzugsweise amorphen Polyester bestehen insbesondere bevorzugt aus mindestens einer Di- und/oder Polycarbonsäure und mindestens einem Diol oder Polyol, wobei die Summe aller Di- und/oder Polycarbonsäuren und Diole oder Polyole zusammen jeweils 100 Mol-% beträgt. Das molare Verhältnis der Di- und/oder Polycarbonsäuren zu der Diol- oder Polyolkomponente im erfindungsgemäß hergestellten Polyester beträgt 1:1,50 bis 1:1,01 insbesondere 1:1,35 bis 1:1,05. Die Di- und/oder Polycarbonsäurenkomponente besteht dabei insbesondere aus
1) mindestens 35-100 Mol-%, vorzugsweise aus 45-98 Mol-% einer aromatischen Di- und/oder Polycarbonsäuren, deren Anhydride oder Ester, wobei die genannten aromatischen Di- und/oder Polycarbonsäuren einzeln oder als Mischung eingesetzt werden können und optional auch Di- und/oder Polycarbonsäuren mit mehr als zwei Carbonsäurefunktionalitäten zum Einsatz kommen
   und
2) mindestens 0-65 Mol-%, vorzugsweise 2-55 Mol-% gesättigter und/oder ungesättigter aliphatischen oder cycloaliphatischen Di- und/oder Polycarbonsäuren, insbesondere Dicarbonsäuren, deren Anhydride oder Ester, wobei die genannten gesättigten und/oder ungesättigten aliphatischen oder cycloaliphatischen Di- und/oder Polycarbonsäuren einzeln oder als Mischung eingesetzt werden können
   und
3) optional bis zu 5 Mol-% einer Monocarbonsäure, insbesondere Benzoesäure oder ungesättigte oder gesättigte Fettsäuren, wie beispielsweise Stearinsäure, Palmitinsäure, Kokosfettsäure, Myristinsäure, Laurinsäure, Perlagonsäure, Myristoleinsäure, Palmitoleinsäure, Icosensäure, Ölsäure, Linolsäure oder Linolensäure.

Die Diol- oder Polyolkomponente besteht dabei insbesondere aus
1) mindestens 10-90 Mol-%, vorzugsweise 20-70 Mol-% eines linearen aliphatischen Diols, wobei insbesondere die Diole Ethylenglykol, Propandiol-1,3, Butandiol-1,4, Pentandiol-1,5, Hexandiol-1,6, Octandiol-1,8, Nonandiol-1,9 und Dodecandiol-1,12 einzeln oder als Mischung eingesetzt werden können
   und
2) mindestens 10-90 Mol-%, vorzugsweise 30-80 Mol-% eines verzweigten aliphatischen oder cycloaliphatischen Diols oder Polyols, wobei insbesondere die Diole Propandiol-1,2, Butandiol-1,3, Butandiol-1,2, Neopentylglykol, Butylethylpropandiol-1,3, Methylpropandiol-1,3, Methylpentandiole, Cyclohexandimethanole, Tricylclo-[2.2.1]-decandimethanol, Limonendimethanol, und die mehrfachfunktionellen Polyole Trimethylolpropan, Pentaerythrol einzeln oder als Mischung eingesetzt werden können
   und
3) optional bis zu 5 Mol-% eines aromatischen Diols oder Polyols oder eines Etherdiols, insbesondere Dihydroxynaphthalin, Oligomere des Ethylenglykols oder Polymere des Butandiol-1,4 oder Mischungen der beiden
   und
4) optional bis zu 5 Mol-% eines Fettalkohols, beispielsweise Eicosanol, Stearylalkohol, Cetylalkohol, Myristylalkohol oder Laurylalkohol.

Die erfindungsgemäß hergestellten Polyester sind insbesondere gekennzeichnet durch eine OH-Zahl im Bereich von 0,1 - 15 mg KOH/g, bevorzugt 3 - 10 mg KOH/g. Die Hydroxylzahl (OHZ) wird bestimmt nach DIN 53240-2.

Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die Säurezahl (SZ) der erfindungsgemäß hergestellten Polyester liegt insbesondere im Bereich von 0,1 - 3 mg KOH/g, bevorzugt 0,1 - 1,2 mg KOH/g. Die Säurezahl wird bestimmt nach DIN EN ISO 2114.

Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N methanolischer Kalilauge gegen Phenolphthalein titriert.

Die Viskositätszahl (VIZ) der erfindungsgemäß hergestellten Polyester liegt insbesondere im Bereich von 40 - 180 cm³/g, bevorzugt zwischen 50 - 120 cm³/g. Die VIZ ist ein Maß zur relativen Bestimmung des Molekulargewichts, wobei man unter der Viskositätszahl (VIZ) in cm³/g die relative Viskositätsänderung einer verdünnten Polymerlösung zur reinen Lösemittelmischung, bezogen auf die Massenkonzentration des Polymers, versteht. Die Bestimmung der VIZ erfolgt nach DIN 53728. Im Rahmen der vorliegenden Erfindung wird zur Bestimmung der VIZ ein Gemisch aus Phenol / ortho-Dichlorbenzol (50/50 Gew.-%) verwendet. Die Massenkonzentration beträgt 0,5 g Polymer in 100 cm³ Lösemittelgemisch.

Das zahlenmittlere Molgewicht (M_{N}) der erfindungsgemäß hergestellten Polyester liegt vorzugsweise im Bereich von 10.000 - 30.000 g/mol. Das massenmittlere Molgewicht (Mw) liegt bevorzugt im Bereich von 35.000 - 80.000 g/mol.

Das Molekulargewicht wird bestimmt mittels Gelpermeationschromatographie (GPC). Die Charakterisierung der Proben erfolgte in Tetrahydrofuran als Eluent nach DIN 55672-1.
Mₙ (UV) = Zahlenmittleres Molgewicht (GPC, UV-Detektion), Angabe in g / mol
M_{w} (UV) = Massenmittleres Molgewicht (GPC, UV-Detektion), Angabe in g / mol
Vorzugsweise weisen die erfindungsgemäß hergestellten Polyester eine Glasübergangstemperatur (Tg) zwischen 35 - 150 °C, bevorzugt 40 - 130 °C auf. Die Glasübergangstemperatur T_{g} wird bestimmt mittels DSC (Differential Scanning Calorimetry) nach DIN EN ISO 11357-1 gemessen. Die angegebenen Werte werden einem zweiten Aufheizzyklus entnommen.

Der Erweichungspunkt der erfindungsgemäß hergestellten Polyester liegt im Bereich von 100 - 200 °C, insbesondere im Bereich von 120 - 180 °C. Die Bestimmung des Erweichungspunktes erfolgt nach der Ring- und Kugelmethode gemäß DIN EN 1427.

Im erfindungsgemäßen Verfahren erfolgt in einem ersten Schritt die Um- und/oder Veresterung von Di- und/oder Polycarbonsäuren mit ein- oder mehrfach funktionellen Alkoholen und/oder die Umsetzung von Lactonen, nachfolgend auch Umesterung oder Veresterung genannt, insbesondere in Anwesenheit eines Um- bzw. Veresterungskatalysators. Dabei entstehen Diol-Addukte der Di- oder Polycarbonsäuren, während Wasser oder abgespaltene Alkohole abdestillieren.

Dazu werden die entsprechenden Ausgangsstoffe in einen Kessel eingebracht.

Geeignete Katalysatoren für diesen Schritt sind dem Fachmann bekannt. Beispielsweise eignen sich Zinkverbindungen, Zinnverbindungen, Titanverbindungen oder Phosphorverbindungen oder Mischungen aus diesen, insbesondere werden Zink(II)verbindungen, insbesondere Zinkacetat, Zinkchlorid, Zinn(II)- oder Zinn(VI)-verbindungen, insbesondere Zinn(II)-octoat, Zinn(II)-chlorid, Monobutylzinnsäure, Dibutylzinnoxid, Butylzinndihydroxy-chlorid oder Butylzinn tris 2-ethylhexoat, oder Titanverbindungen, insbesondere Butyltitanat, Propyltitanat, Octylenglykoltitanat oder Tyzer TEP, eingesetzt. Die Menge der verwendeten katalytisch aktiven Spezies beträgt in der Regel zwischen 2,5 ppm und 100 ppm, insbesondere zwischen 10 ppm und 75 ppm, bezogen auf den Polyester, wobei sich die ppm-Angabe auf die Masse bezieht (Massen-ppm).

Die Um- und/oder Veresterung erfolgt in der Regel bei einer Temperatur im Bereich von 165 °C bis 230 °C, insbesondere 175 °C bis 225 °C.

Das Produkt des ersten Schrittes ist bei den Verarbeitungstemperaturen niedrig viskos und weist insbesondere folgende Eigenschaften auf:

| | |
|---|---|
| OHZ: | 30 - 150 mg KOH/g, bevorzugt 45 - 130 mg KOH/g |
| SZ: | 0,1 - 30 mg KOH/g, bevorzugt 0,1 - 20 mg KOH/g |
| VIZ: | 7 - 25 cm³/g, bevorzugt 10 - 20 cm³/g |
| Mn (GPC): | 500 - 5.000, bevorzugt 1.500 - 4.000 |
| Mw (GPC): | 1.500 - 10.000, bevorzugt 2.000 - 7.500 |
| Schmelzeviskosität (150°C): | 0,05 - 2 Pas, bevorzugt 0,15 - 1,5 Pas |

Die Schmelzeviskosität des Produktes aus dem ersten Reaktionsschritt wird mit einem Platte/PlatteViskosimeter der Firma Anton Paar, Gerät MC 301 bei der oben genannten Temperatur bestimmt. Der Durchmesser der Platten beträgt 25 mm, ihr Abstand voneinander 1,000 mm und die Schergeschwindigkeit 100/s. In den angegebenen Parametern zeigen die Polymerschmelzen Newtonsches Verhalten, d. h. die Viskosität ändert sich nicht bei Änderung der Schergeschwindigkeit.

An den ersten Schritt der Um- und/oder Veresterung schließt sich der zweite Schritt der Polykondensation an, der erfindungsgemäß in einem Kneter durchgeführt wird.

Als Kneter eignen sich ein- oder zweiwellige Kneter, Ringscheibenreaktoren sowie ein- oder zweiwellige Extruder, deren Produkteintrag und -austrag sowohl diskontinuierlich als auch kontinuierlich erfolgen kann. Im Rahmen der vorliegenden Erfindung werden unter dem Oberbegriff Kneter auch Ringscheibenreaktoren verstanden. Kneter zeichnen sich durch einen breiten Verweilzeitbereich bei großem Arbeitsvolumen, sehr guten Mischeigenschaften, durch ein hohes Drehmoment, gute Selbstreinigungseigenschaften der Oberflächen sowie einer gute Temperaturkontrolle der Reaktionsmischung aufgrund einer großen Heiz-/Kühlfläche aus.

Durch die Rotation der Kneterwelle(n) wird die Polymerschmelze ständig aufgerissen, gemischt, wieder zusammengefaltet und gefördert, so dass ein ständiger Stofftransport zur Oberfläche und zurück in das Schmelzeinnere entsteht.

Zur Durchführung des erfindungsgemäßen Verfahrens eignen sich insbesondere auch zweiwellige Knetreaktoren, wie sie beispielsweise in der DE 199 40 521 A1, DE 101 50 900, der DE 41 18 884 A1 oder der EP 0 853 491 gezeigt sind. Diese Reaktoren haben den Vorteil, dass durch die rotierenden Wellen über die gesamte Verfahrenslänge eine starke Oberflächenerneuerung der Polymerschmelze generiert wird. Gegenüber den herkömmlichen Reaktoren wird dadurch das Vakuumgetriebene Abziehen der Spaltprodukte über den Brüdenraum des Kneters stark beschleunigt, wodurch wiederum der Kettenaufbau des Polymers beschleunigt wird. Die Knetreaktoren sind in Bezug auf die Selbstreinigung und die Vermeidung von toten Zonen optimiert. Ferner ist die Form der Knetbarren vorzugsweise derart gewählt, dass beim gegenseitigen Eingriff der Knet- bzw. Rührbarren keine Kompressionszonen auftreten. Das gesamte Verfahren sollte kontinuierlich ablaufen. Dabei findet eine gezielte, axiale Förderung der viskosen Masse statt (plug flow = Pfropfenströmung). Hierbei sind verschiedene Wellengeometrien wählbar. Die Förderwinkel der Knetbarren sind anpassbar und dienen der axialen Förderung der Masse im Reaktor. Es besteht ferner die Möglichkeit, Rückförderzonen einzubauen, die den Füllgrad im Reaktor kontrollieren. Solche Rückförderzonen können auch eine Rückmischung bewirken.

Bei geeigneten Ringscheibenreaktoren handelt es sich zumeist um zylindrische, liegende, beheizte Behälter mit Zu- und Ablaufanschlüssen für das Umesterungsprodukt und das Polykondensat an den einander gegenüberliegenden Enden des Ringscheibenreaktors. In dem Ringscheibenreaktor befindet sich eine Vielzahl von um eine horizontale Achse rotierenden Elementen, die das Umesterungsprodukt durchmischen und durch Ablaufen der an diesen Elementen anhaftenden zähen Schmelze eine große Oberfläche zur Ausgasung des Polykondensats erzeugen. Derartige Vorrichtungen sind in den deutschen Patentanmeldungen 1 745 541, 1 720 692, 2 100 615 und 2 114 080 sowie in den europäischen Patenten und Patentanmeldungen 0 320 586, 0 719 582, 0 711 597 und 1 386 659 beschrieben.

Das Polymer wird durch den Kneter verarbeitet, bis die gewünschten Eigenschaften, wie Molekulargewicht und Kennzahlen des Polyesters erreicht sind.

Geeignete Katalysatoren für die Polykondensation sind dem Fachmann bekannt. Beispielsweise eignen sich Zinkverbindungen, Germaniumdioxid, Antimontriacetat, Titanverbindungen, insbesondere werden Zinkacetat, Germaniumdioxid, oder Titanverbindungen, insbesondere Butyltitanat, Propyltitanat, Octylenglykoltitanat oder Tyzer TEP, eingesetzt. Die Menge der verwendeten katalytisch aktiven Spezies beträgt in der Regel zwischen 2,5 ppm und 100 ppm, insbesondere zwischen 10 ppm und 75 ppm, bezogen auf den Polyester, wobei sich die ppm-Angabe auf die Masse bezieht (Massen-ppm).

Die Gesamtmenge der katalytisch aktiven Spezies aus der Um- und/oder Veresterung und der Polykondensation liegt zwischen 5 ppm und 150 ppm, bezogen auf den Polyester, wobei sich die ppm-Angabe auf die Masse bezieht (Massen-ppm).

Die Verweilzeit des Polymers im Kneter hängt von vielen Parametern ab und liegt in der Regel bei 5 Minuten bis 8 Stunden, bevorzugt bei 20 Minuten bis 5 Stunden

Die Polykondensation im Kneter kann bei vermindertem Druck erfolgen, insbesondere im Bereich zwischen 0,1 mbar bis 100 mbar.

Die Wellendrehzahl des Kneters kann im Bereich von 5 rpm bis 200 rpm liegen, insbesondere zwischen 40 rpm und 150 rpm.

Die Temperaturen der Polymerschmelze betragen 220 °C - 245 °C. Diese niedrigen Temperaturen ermöglichen sowohl die schonende Herstellung der Polyester, so dass kaum oder keine Zersetzungsreaktionen zu erwarten sind, als auch eine energieeffiziente Herstellung der Polyester und trägt damit zur Schonung der natürlichen Ressourcen bei. Darüber hinaus lassen sich auf diese Weise völlig überraschend auch Co-Polyester mit geringerer Verfärbung und niedriger Säurezahl erhalten. Die durch eine hohe Temperaturbelastung der Polyesterschmelze auftretenden Zersetzungsreaktionen, die sich in einer erhöhten Säurezahl und in erhöhten Farbzahlen messen lassen, führen einerseits dazu, dass das gewünschte Molekulargewicht nicht erreicht werden kann, andererseits eignen sich verfärbte Produkte auch vielfach nicht in den oben genannten Anwendungen.

Die mit dem erfindungsgemäßen Verfahren hergestellten Polyester eignen sich insbesondere für den Einsatz als Hauptbindemittel, Nebenbindemittel oder Zusatzkomponente in der Metallbeschichtung, Folienherstellung, Folienbeschichtung, z. B. mittels Extrusionsbeschichtung, und Klebstoffherstellung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

### Beispiele:

### Um- und Veresterung:

### Beispiel 1:

In einer 10I batch Metallapparatur mit Einfüllstutzen, Destillationsbrücke und Vakuumanschluss werden 3604 g Dimethylterephthalat (DMT) (18,58 mol), 1571 g 1,2-Propandiol (PD-1,2) (20,67 mol), 943 g 1,3-Propandiol (PD-1,3) (12,41 mol) und 1323 g Butylethyl-propandiol-1,3 (BEPD) (8,27 mol) zusammen mit 3,50 g Monobutylzinnsäure (MBTS) erhitzt, bis die Methanolabspaltung beginnt (165-185°C). Anschließend wird das Reaktionsgemisch so weiter erwärmt, dass die Kopftemperatur bei 65-70°C konstant bleibt. Nach abgeschlossener Methanolabspaltung werden bei 180 °C Innentemperatur 1285 g Isophthalsäure (IPS) (7,74 mol) und 678 g Adipinsäure (AD) (4,64 mol) zugegeben, das Gemisch wird weiter erhitzt bis bei ca. 200 °C die Wasserabspaltung startet. Diese wird solange fortgesetzt, bis die Kopftemperatur wieder unter 85°C sinkt. Die Eigenschaften des Um- und Veresterungsproduktes sind in Tabelle 1 zusammengestellt.

### Beispiel 2:

In einer 10I batch Metallapparatur mit Einfüllstutzen, Destillationsbrücke und Vakuumanschluss werden 1812 g Dimethylterephthalat (DMT) (9,34 mol), 203 g Monoethylenglycol (MEG) (3,28 mol), 1717 g Neopentylglycol (NPG) (16,51 mol) und 357 g Cyclohexandimethanol 90 (CHDM 90) (2,23 mol) zusammen mit 0,90 g Zinkacetat erhitzt, bis die Methanolabspaltung beginnt (165 - 185 °C). Anschließend wird das Reaktionsgemisch so weiter erwärmt, dass die Kopftemperatur bei 65 - 70 °C konstant bleibt. Nach abgeschlossener Methanolabspaltung wird bei 180 °C Innentemperatur 1550 g Isophthalsäure (IPS) (9,34 mol) zugegeben und das Gemisch weiter erhitzt. Bei ca. 210 °C startet die Wasserabspaltung, welche solange fortgesetzt wird, bis die Kopftemperatur wieder unter 85 °C sinkt. Die Eigenschaften des Um- und Veresterungsproduktes sind in Tabelle 1 zusammengestellt.

### Beispiel 3:

In einer 10I batch Metallapparatur mit Einfüllstutzen, Destillationsbrücke und Vakuumanschluss werden 2986 g Isophthalsäure (IPS) (17,99 mol), 2264 g 2,6-Naphthalindicarbonsäure (10,48 mol), 16 g Trimelithsäureanhydrid (TMA) (0,08 mol), 676 g 1,4-Butandiol (BD-1,4) (7,51 mol), 698 g Monoethylenglycol (MEG) (11,26 mol), 1562 g Neopentylglycol (NPG) (15,02 mol) und 601 g Cyclohexandimethanol 90 (CHDM 90) (3,76 mol) zusammen mit 2,80 g Octylenglycoltitanat (OGT) erhitzt, bis die Wasserabspaltung beginnt (185 - 195 °C).

Die Wasserabspaltung wird solange fortgesetzt, bis die Kopftemperatur wieder unter 85 °C sinkt. Die Eigenschaften des Um- und Veresterungsproduktes sind in der Tabelle X zusammengestellt.

### Beispiel 4:

In einer 10I batch Metallapparatur mit Einfüllstutzen, Destillationsbrücke und Vakuumanschluss werden 3604 g Dimethylterephthalat (DMT) (18,58 mol), 1319 g 1,4-Butandiol (BD-1,4) (14,66 mol) und 2873 g Tricylclo-[2.2.1]-decandimethanol (TCD-DM) (14,66 mol) zusammen mit 5,80 g Octylenglycoltitanat (OGT) erhitzt, bis die Methanolabspaltung beginnt (150 - 165 °C). Anschließend wird das Reaktionsgemisch so weiter erwärmt, dass die Kopftemperatur bei 65 - 70 °C konstant bleibt. Nach abgeschlossener Methanolabspaltung fällt die Kopftemperatur unter 65 °C. Die Eigenschaften des Umesterungsproduktes sind in Tabelle 1 zusammengestellt.

### Beispiel 5:

In einer 10I batch Metallapparatur mit Einfüllstutzen, Destillationsbrücke und Vakuumanschluss werden 1848 g Dimethylterephthalat (DMT) (9,53 mol), 1039 g 2-Methylpropan-1,3-diol (MPD) (11,54 mol), 2078 g 1,4-Butandiol (BD-1,4) (23,09 mol) und 239 g Monoethylenglycol (MEG) (3,85 mol) zusammen mit 3,50 g Octylenglycoltitanat (OGT) erhitzt, bis die Methanolabspaltung beginnt (180 - 190 °C). Anschließend wird das Reaktionsgemisch so weiter erwärmt, dass die Kopftemperatur bei 65 - 70 °C konstant bleibt. Nach abgeschlossener Methanolabspaltung werden bei 180 °C Innentemperatur 1581 g Isophthalsäure (IPS) (9,52 mol) und 1955 g Hexahydrophthalsäureanhydrid (HHPSA) (12,69 mol) zugegeben. Durch Erhöhen der Reaktionstemperatur startet bei ca. 210 °C die Wasserabspaltung, welche solange fortgesetzt wird, bis die Kopftemperatur wieder unter 85 °C sinkt. Die Eigenschaften des Um- und Veresterungsproduktes sind in der Tabelle X zusammengestellt.

**Tabelle 1: Kennzahlen der Um- und/oder Veresterungsprodukte**

| **Kennzahlen** | **Beispiel 1** | **Beispiel 2** | **Beispiel 3** | **Beispiel 4** | **Beispiel 5** |
|---|---|---|---|---|---|
| **OHZ** [mg KOH/g] | 138 | 81 | 158 | 95 | 79 |
| **SZ** [mg KOH/g] | 8 | 16 | 13 | 0,2 | 28 |
| **Mn** [g/mol] | 1500 | 1800 | 800 | 1200 | 1400 |
| **Mw** [g/mol] | 2200 | 3300 | 1600 | 2500 | 2500 |
| **Schmelzviskosität** [Pas] | 0,5 | 1,1 | 0,15 | 0,9 | 0,15 |
| **Tg** [°C] | -4 | 39 | 9 | 36 | -2 |

### Polykondensation

### A) Kondensation im Listkneter (Typ CRP4konti der Fa. List)

A1) Batch-Verfahren: Ca. 4 kg geschmolzenes Um- und/oder Veresterungsprodukt werden mit dem Katalysator (0,1 Gew.-%) vorgemischt und anschließend wird das Gemisch über eine beheizte Rohrleitung in den List-Kneter überführt. Dieser wird nach Befüllung auf die Kondensationstemperatur erwärmt und mit Erreichen der Betriebstemperatur wird innerhalb von 30 Minuten der Reaktorinnendruck auf den vorgegebenen Wert abgesenkt. Bei konstanter Drehzahl der Knetwellen erfolgt die Kondensation bis zum vorgegebenen Molekulargewicht oder bis zum maximalen Anstieg der Schmelzviskosität. Die Prozessdaten und die Produktkennzahlen sind in Tabelle 2 und 3 angegeben.

**Tabelle 2: Prozessdaten zur Kondensationsmethode A1)**

| **Parameter** | **Beispiel 1A1** | **Beispiel 2A1** | **Beispiel 3A1** | **Beispiel 4A1** |
|---|---|---|---|---|
| **Temperatur (innen)** | 230 | 235 | 235 | 240 |
| **Drehzahl** | 120 | 120 | 110 | 125 |
| **Verweilzeit (min.)** | 270 | 125 | 85 | 210 |
| **Vakuum/ mbar** | < 1 | < 1 | < 1 | < 1 |
| **Katalysator/ -menge (wt%)** | OGT / 0,05 | ZnOAc / 0,05 | OGT / 0,06 | OGT / 0,08 |

**Tabelle 3: Kennzahlen zur Kondensationsmethode A1)**

| **Kennzahlen** | **Beispiel 1A1** | **Beispiel 2A1** | **Beispiel 3A1** | **Beispiel 4A1** |
|---|---|---|---|---|
| **OHZ [mg KOH/g]** | 7,0 | 7,4 | 2,1 | n.m. |
| **SZ [mg KOH/g]** | 0,7 | 0,8 | 0,8 | 1,2 |
| **Mn [g/mol]** | 10.100 | 11.400 | 11.100 | 29.500 |
| **Mw [g/mol]** | 36.100 | 40.800 | 36.400 | 60.600 |
| **VIZ [cm³/g]** | 58 | 62 | 57 | 80 |
| **Tg [°C]** | 34 | 71 | 66 | 104 |

A2) Kontinuierliches Verfahren: In den auf Betriebstemperatur vorgeheizten und Betriebsdruck evakuierten Reaktor wird das Gemisch aus Um- und/oder Veresterungsprodukt und Katalysator bei konstanter Wellendrehzahl kontinuierlich eingetragen und dabei der Masseneingangsstrom bestimmt. Das Produkt wird so lange ausgefahren, bis sich ein stationärer Zustand eingestellt hat. Durch Variation der Prozessparameter erfolgt dabei immer wieder die Einstellung eines neuen stationären Zustandes.

Die Produktkennzahlen in der Tabelle 5 beziehen sich auf die angegebenen Prozessdaten im stationären Zustand (Tabelle 4).

**Tabelle 4: Prozessdaten zur Kondensationsmethode A2)**

| **Parameter** | **Beispiel 2A2** | **Beispiel 4A2** |
|---|---|---|
| **Temperatur (innen)** | 210 | 245 |
| **Drehzahl** | 57 | 125 |
| **Verweilzeit (min.)** | 225 | 255 |
| **Vakuum/ mbar** | 30 | <1 |
| **Katalysator/ -menge (wt%)** | ZnOAc / 0,05 | OGT / 0,08 |
| ZnOAc - Zink(II)-acetat | | |

**Tabelle 5: Kennzahlen zur Kondensationsmethode A2)**

| **Kennzahlen** | **Beispiel 2A2** | **Beispiel 4A2** |
|---|---|---|
| **OHZ [mg KOH/g]** | 7,9 | n.m. |
| **SZ [mg KOH/g]** | 1,2 | 0,9 |
| **Mn [g/mol]** | 11.200 | 22.500 |
| **Mw [g/mol]** | 39.400 | 49.300 |
| **VIZ [cm³/g]** | 58 | 73 |
| **Tg [°C]** | 70 | 98 |

### Vergleichsbeispiele

### B) Kondensation im 10I-Metallrührkessel im Batch-Verfahren:

Die Polymerschmelze wird nach der Um- und Veresterung mit dem Kondensationskatalysator versetzt, homogenisiert, auf die Kondensationstemperatur erhitzt und anschließend innerhalb von 30 Minuten der Reaktorinnendruck auf < 1 mbar gesenkt. Nach Erreichen des vorgegebenen Molekulargewichts oder der maximal erreichbaren Schmelzviskosität wird der Kessel mithilfe von Stickstoffüberdruck entleert. Die Prozessdaten und die Produktkennzahlen sind in Tabelle 6 bzw. 7 angegeben.

**Tabelle 6: Prozessdaten zur Kondensationsmethode B)**

| **Parameter** | **Vgl.-bsp. 1** | **Vgl.-bsp. 2** | **Vgl.-bsp. 3** | **Vgl.-bsp. 4** |
|---|---|---|---|---|
| **Temperatur (innen)** | 245 | 265 | 245 | 270 |
| **Drehzahl** | 70 | 70 | 70 | 70 |
| **Verweilzeit (min.)** | 380 | 705 | 680 | 590 |

| **Vakuum/ mbar** | < 1 | < 1 | 1,2 | <1 |
|---|---|---|---|---|
| **Katalysator/ -menge (wt%)** | OGT / 0,05 | ZnOAc / 0,04 | OGT / 0,06 | OGT / 0,08 |
| ZnOAc - Zink(II)-acetat | | | | |

**Tabelle 7: Kennzahlen zur Kondensationsmethode B)**

| **Kennzahlen** | **Vgl.-bsp. 1** | **Vgl.-bsp. 2** | **Vgl.-bsp. 3** | **Vgl.-bsp. 4** |
|---|---|---|---|---|
| **OHZ [mg KOH/g]** | 5,7 | 7,2 | 3,5 | n.m. |
| **SZ [mg KOH/g]** | 1,7 | 1,8 | 1,2 | 3,3 |
| **Mn [g/mol]** | 11.200 | 10.400,0 | 11.100 | 11.300,0 |
| **Mw [g/mol]** | 41.500 | 35.500,0 | 33.400 | 36.300,0 |
| **VIZ [cm³/g]** | 63 | 55 | 54 | 59 |
| **Tg [°C]** | 36 | 69 | 66 | 106 |
| n.m. = nicht messbar | | | | |

### C) Kondensation im Ringscheibenreaktor (Fa. Lurgi) im Batch-Verfahren:

Die Schmelze des Um- und/oder Veresterungsproduktes wird mit entsprechender Kondensationskatalysatormenge versetzt, homogenisiert, auf Kondensationstemperatur erwärmt und in den Ringscheibenreaktor eingetragen. Innerhalb von 30 Minuten wird der Reaktorinnendruck auf < 1mbar gesenkt und die Kondensation nach Erreichen des vorgegebenen Molekulargewichtes, erkennbar durch den Anstieg der Schmelzviskosität im Reaktor, abgebrochen und das Material aus dem Reaktor ausgetragen. Auch bei Einsatz eines Ringscheibenreaktors werden Polyester gemäß der vorliegenden Erfindung erhalten, wobei die Verweilzeiten gegenüber den Verfahren aus dem Stand der Technik ebenfalls deutlich reduziert werden können.

## Patentansprüche

1. Verfahren zur Herstellung von amorphen Polyestern, wobei in einem ersten Schritt in einem Kessel Di- und/oder Polycarbonsäuren mit ein- oder mehrfach funktionellen Alkoholen umgesetzt werden und/oder Lactone umgesetzt werden und in einem zweiten Schritt eine Polykondensation durchgeführt wird, wobei der zweite Schritt in einem Kneter erfolgt, **dadurch gekennzeichnet dass** die Di- und/oder Polycarbonsäuren ausgewählt sind aus Adipinsäure, Adipinsäuredimethylester, Sebacinsäure, Dimethylsebacat, Phthalsäure, Isophthalsäure, Terephthalsäure, 2,6-Naphthalindicarbonsäure, Trimellitsäure, deren Ester-Derivate oder deren Anhydride, und die ein- oder mehrfach funktionellen Alkohole ausgewählt sind aus Ethylenglykol, Propandiol-1,2, Propandiol-1,3, Butandiol-1,4, Pentandiol-1,5, Hexandiol-1,6, Neopentylglykol, Butylethylpropandiol-1,3, Methylpropandiol-1,3, Methylpentandiole, Cyclohexandimethanole, Tricylclo-[2.2.1]-decandimethanol, Isomeren des Limonendimethanols, Trimethylolpropan und Mischungen daraus, die Polyester ein zahlenmittleres Molgewicht (M_{N}) im Bereich von 9.000 - 35.000 g/mol, bestimmt mittels Gelpermeationschromatographie (GPC) und ein massenmittleres Molgewicht (Mw) im Bereich von 30.000 - 100.000 g/mol, bestimmt mittels Gelpermeationschromatographie (GPC), aufweisen, wobei als Kneter ein- oder zweiwellige Kneter, Ringscheibenreaktoren oder ein- oder zweiwellige Extruder eingesetzt werden und wobei im zweiten Schritt die Temperaturen der Polymerschmelze 220 °C - 245 °C betragen.

2. Verfahren nach Anspruch 1, **dadurch gekennzeichnet dass** die Polyester eine OH-Zahl im Bereich von 0,1 - 15 mg KOH/g, aufweisen.

3. Verfahren nach Anspruch 1 oder 2, **dadurch gekennzeichnet dass** die Polyester eine Säurezahl (SZ) im Bereich von 0,1 - 3 mg KOH/g aufweisen.

4. Verfahren nach einem oder mehreren der Ansprüche 1 bis 3, **dadurch gekennzeichnet, dass** die Verweilzeit des Polyesters im Kneter bei 5 Minuten bis 8 Stunden liegt.

5. Verfahren nach einem oder mehreren der Ansprüche 1 bis 4, **dadurch gekennzeichnet, dass** die Polykondensation im Kneter bei einem Druck im Bereich zwischen 0,1 mbar bis 100 mbar erfolgt.

6. Verfahren nach einem oder mehreren der Ansprüche 1 bis 5, **dadurch gekennzeichnet, dass** die Wellendrehzahl des Kneters im Bereich von 5 rpm bis 200 rpm liegt.

## Claims

1. Process for producing amorphous polyesters, where, in a first step, in a tank, di- and/or polycarboxylic acids are reacted with mono- or polyhydric alcohols, and/or lactones are reacted and, in a second step, a polycondensation is carried out, where the second step takes place in a kneader, **characterized in that** the di- and/or polycarboxylic acids are those selected from adipic acid, dimethyl adipate, sebacic acid, dimethyl sebacate, phthalic acid, isophthalic acid, terephthalic acid, 2,6-naphthalenedicarboxylic acid, trimellitic acid, ester derivatives thereof and anhydrides thereof, and the mono- or polyhydric alcohols are those selected from ethylene glycol, 1,2-propanediol, 1,3-propanediol, 1,4-butanediol, 1,5-pentanediol, 1,6-hexanediol, neopentyl glycol, butylethyl-1,3-propanediol, methyl-1,3-propanediol, methylpentanediols, cyclohexanedimethanols, tricyclo[2.2.1]decanedimethanol, isomers of limonenedimethanol, trimethylolpropane and mixtures thereof, the number-average molar mass (M_{N}) of the polyesters is in the range from 9000 to 35 000 g/mol, determined by gel permeation chromatography (GPC), and the mass-average molar mass (M_{W}) of the polyesters is in the range from 30 000 to 100 000 g/mol, determined by gel permeation chromatography (GPC), where kneaders used comprise single- or twin-shaft kneaders, rotating-disc reactors, or single- or twinscrew extruders, and where, in the second step, the temperatures of the polymer melts are 220°C-245°C.

2. Process according to Claim 1, **characterized in that** the OH number of the polyesters is in the range from 0.1 to 15 mg KOH/g.

3. Process according to Claim 1 or 2, **characterized in that** the acid number (AN) of the polyesters is in the range from 0.1 to 3 mg KOH/g.

4. Process according to one or more of Claims 1 to 3, **characterized in that** the residence time of the polyester in the kneader is from 5 minutes to 8 hours.

5. Process according to one or more of Claims 1 to 4, **characterized in that** the polycondensation takes place in the kneader at a pressure in the range from 0.1 mbar to 100 mbar.

6. Process according to one or more of Claims 1 to 5, **characterized in that** the shaft rotation rate of the kneader is in the range from 5 rpm to 200 rpm.

## Revendications

1. Procédé de préparation de polyesters amorphes, dans lequel dans une première étape dans une cuve, des acides dicarboxyliques et/ou polycarboxyliques sont mis à réagir avec des alcools monofonctionnels ou polyfonctionnels et/ou mis à réagir avec des lactones et dans une deuxième étape une polycondensation est mise en oeuvre, la deuxième étape étant réalisée dans un malaxeur, **caractérisé en ce que** les acides dicarboxyliques et/ou polycarboxyliques sont choisis parmi l'acide adipique, l'ester diméthylique de l'acide adipique, l'acide sébacique, le sébaçate de diméthyle, l'acide phtalique, l'acide isophtalique, l'acide téréphtalique, l'acide 2,6-naphtalènedicarboxylique, l'acide triméllitique, leurs dérivés esters ou leurs anhydrides, et les alcools monofonctionnels ou polyfonctionnels sont choisis parmi l'éthylène glycol, le propanediol-1,2, le propanediol-1,3, le butanediol-1,4, le pentanediol-1,5, l'hexanediol-1,6, le néopentylglycol, le butyléthylpropanediol-1,3, le méthylpropanediol-1,3, les méthylpentanediols, les cyclohexanediméthanols, le tricylclo-[2.2.1]décanediméthanol, les isomères du limonènediméthanol, le triméthylolpropane et des mélanges correspondants, les polyesters présentent un poids molaire moyen en nombre (M_{N}) dans la plage de 9 000 à 35 000 g/mole, déterminé au moyen d'une chromatographie à perméation de gel (GPC) et un poids molaire moyen en masse (M_{W}) dans la plage de 30 000 à 100 000 g/mole, déterminé au moyen d'une chromatographie à perméation de gel (GPC), dans lequel en tant que malaxeur, des malaxeurs à un arbre ou à deux arbres, des réacteurs à disques annulaires ou des extrudeuses à un arbre ou à deux arbres sont utilisé (e) s et dans la deuxième étape les températures de la masse fondue de polymère étant de 220 °C à 245 °C.

2. Procédé selon la revendication 1, **caractérisé en ce que** les polyesters présentent un indice d'OH dans la plage de 0,1 à 15 mg de KOH/g.

3. Procédé selon la revendication 1 ou 2, **caractérisé en ce que** les polyesters présentent un indice d'acide (SZ) dans la plage de 0,1 à 3 mg de KOH/g.

4. Procédé selon l'une quelconque ou plusieurs des revendications 1 à 3, **caractérisé en ce que** la durée de séjour du polyester dans le malaxeur se situe de 5 minutes à 8 heures.

5. Procédé selon l'une quelconque ou plusieurs des revendications 1 à 4, **caractérisé en ce que** la polycondensation est réalisée dans le malaxeur à une pression dans la plage comprise entre 0,1 mbar et 100 mbars.

6. Procédé selon l'une quelconque ou plusieurs des revendications 1 à 5, **caractérisé en ce que** la vitesse de rotation de l'arbre du malaxeur se situe dans la plage de 5 tpm à 200 tpm.
